# EUROPÄISCHE PATENTSCHRIFT

(11) **EP 3 853 103 B1**
(45) Veröffentlichungstag und Bekanntmachung des Hinweises auf die Patenterteilung: **11.02.2026**
(21) Anmeldenummer: 19773358.7
(22) Anmeldetag: 05.09.2019
(51) Int. Cl.: B62B 7/08, B62B 7/06, B62B 5/06

(54) **KINDERWAGEN**
PUSHCHAIR
POUSSETTE

(30) Priorität: 17.09.2018 DE 202018105304 U
(43) Veröffentlichungstag der Anmeldung: 28.07.2021
(73) Patentinhaber: GB GMBH, 95448 Bayreuth (DE)
(72) Erfinder: FISCHER, Wolfram, 95448 Bayreuth (DE)
(74) Vertreter: Meissner Bolte Partnerschaft mbB
(86) Internationale Anmeldenummer: PCT/EP2019/073696
(87) Internationale Veröffentlichungsnummer: WO 2020/057991

(56) Entgegenhaltungen:
- DE-A1- 10 206 042
- DE-U1- 202005 008 369
- US-A- 4 529 219
- US-A1- 2014 159 348
- US-B1- 7 311 323

## Beschreibung

Die Erfindung betrifft einen Kinderwagenrahmen sowie einen entsprechenden Kinderwagen sowie ein Verfahren zum Zusammenklappen eines Kinderwagenrahmens.

Im Stand der Technik sind Kinderwägen bzw. Kinderwagenrahmen bekannt, die zusammengeklappt werden können, um (beispielsweise beim Transport) eine möglichst kompakte Stellung des Kinderwagens bzw. Kinderwagenrahmens zu ermöglichen. In diesem Zusammenhang zeigt DE 20 22005008 369 U1 einen Faltmechanismus, bei dem eine Faltstellung durch das Einschnappen eines Hakens an einer Verbindungsstrebe arretiert werden kann. Die Arretierung kann über ein Lösepedal gelöst werden. Weitere klappbare Wagenrahmen mit einer Verriegelung der Klappstellung sind bekannt aus der US 7,311,323 B1, aus der US 2014/0159348 A1, aus der DE 102 06 042 A1 sowie aus der US 4,529,219 A1. Weiterhin sind aus dem Stand der Technik Mechanismen bekannt, bei denen eine Verriegelungseinheit direkt im drehbeweglichen bzw. faltbaren Gelenk vorgesehen ist. Insgesamt werden die Lösungen im Stand der Technik als aufwändig oder zumindest unpraktisch empfunden.

Es ist Aufgabe der Erfindung, eine möglichst einfache Lösung vorzuschlagen, um einen Kinderwagenrahmen zusammenklappen zu können. Insbesondere soll der Aufwand bei der Herstellung vergleichsweise gering sein und dennoch eine vergleichsweise einfache und störungsfreie Handhabung des entsprechenden Klappmechanismus möglich sein.

Diese Aufgabe wird insbesondere durch die Merkmale des Anspruchs 1 gelöst.

Insbesondere wird die Aufgabe gelöst durch einen Kinderwagenrahmen, der (reversibel) aus einer Benutzungsstellung in eine Transportstellung überführbar (z. B. klappbar und/oder zusammenschiebbar) ist, umfassend ein erstes Rahmenteil sowie ein zweites Rahmenteil, die gegeneinander klappbar sind, eine an einem ersten Rahmenteil angeordnete (bzw., ggf. dauerhaft, mit diesem verbundene) erste Verriegelungseinrichtung zum Verriegeln einer Klappstellung des ersten Rahmenteils relativ zum zweiten Rahmenteil sowie eine Stellungsüberführungseinrichtung zum Überführen der ersten Verriegelungseinrichtung von einer ersten Stellung gegenüber dem ersten Rahmenteil in eine zweite Stellung gegenüber dem ersten Rahmenteil.

Ein Kerngedanke der Erfindung liegt darin, eine Verriegelungseinrichtung vorzusehen, die gegenüber dem Rahmenteil, an dem sie angeordnet ist, in verschiedene Stellungen gebracht werden kann. Dadurch kann die Verriegelungseinrichtung selbst hinsichtlich ihrer Stellung verändert werden, so dass eine diesbezügliche (vorteilhafte) Anpassung des Kinderwagenrahmens erfolgen kann. Insbesondere kann dadurch erreicht werden, dass eine Stellung (insbesondere die zweite Stellung) eingestellt wird, bei der die Verriegelungseinrichtung weniger hinderlich ist.

Unter einer Verriegelungseinrichtung ist insbesondere ein (ggf. einstückiges, vorzugsweise monolithisch ausgebildetes) Riegelelement zu verstehen. Im Allgemeinen ist die Verriegelungseinrichtung konfiguriert, eine Klappstellung des ersten Rahmenteils relativ zum zweiten Rahmenteil zu verriegeln (zu arretieren).

Unter einer Stellungsüberführungseinrichtung ist eine Einrichtung zu verstehen, die konfiguriert ist, die Verriegelungseinrichtung von einer ersten Stellung (gegenüber dem ersten Rahmenteil) in eine zweite Stellung zu verlagern.

Bei der ersten und zweiten Stellung handelt es sich vorzugsweise jeweils um eine stabile Stellung, insbesondere in dem Sinne, dass die jeweilige Stellung gehalten wird, (zumindest) wenn keine äußere Kraft einwirkt. Neben einer ersten und zweiten Stellung kann (können) ggf. noch mindestens eine weitere oder mehrere weitere Zwischenstellung(en) möglich sein. Diese können stabil oder instabil sein (instabil, beispielsweise, wenn eine Federeinrichtung dafür sorgt, dass letztlich die erste oder zweite Stellung eingestellt wird, wenn ansonsten keine, äußere, Kraft vorliegt). Erste und zweite Stellung können sich insbesondere auf eine Orientierung und/oder Position zumindest eines Teils der Verriegelungseinrichtung beziehen. Wenn ein verschwenkbarer Teil vorliegt, unterscheiden sich erste und zweite Stellung vorzugsweise dadurch, dass ein Winkel zwischen erster und zweiter Stellung mindestens 10°, vorzugsweise mindestens 30°, ggf. mindestens 60° oder sogar (zumindest annähernd) 90° beträgt. Wenn erste und zweite Stellung durch eine (ggf. zumindest teilweise translatorische) Positionsänderung der Verriegelungseinrichtung oder eines Teils der Verriegelungseinrichtung einstellbar sind, bedeutet dies vorzugsweise, dass ein distales Ende dieses Teils bzw. der gesamten Verriegelungseinrichtung zum ersten Rahmenteil in der ersten Stellung einen anderen Abstand zum ersten Rahmenteil aufweist als in der zweiten Stellung (beispielsweise einen Abstand, der um mindestens ± 10 % von dem Abstand abweicht, der in der zweiten Stellung vorliegt, vorzugsweise um mindestens 30 %, weiter vorzugsweise um mindestens 60 %, ggf. um 100 %).

Bei der ersten und zweiten Stellung handelt es sich um verschiedene Stellungen, die dadurch erreicht werden, dass ein vorzugsweise in sich formstabiles bzw. starres Teil der Verriegelungseinrichtung bzw. vorzugsweise die in sich formstabile bzw. starre Verriegelungseinrichtung insgesamt rotiert und/oder verschoben (rotatorisch bewegt) wird. Es kann sich hierbei jedoch auch um Stellungen handeln, bei denen ein (in sich nicht starres) Teil verformt (beispielsweise gestaucht, gestreckt und/oder gebogen) wird. Auch eine Kombination aus Rotation und/oder Translation und/oder Verformung ist möglich.

Vorzugsweise ist die Verriegelungseinrichtung (ggf. ausschließlich) zum Verriegeln bzw. Arretieren einer (teilweise oder vollständig) zusammengeklappten Rahmenstellung (Transportstellung) vorgesehen und entsprechend konfiguriert. Zum Arretieren einer (teilweise oder vollständig) aufgeklappten Rahmenstellung (Benutzungsstellung) kann dann ein separater Riegelmechanismus vorgesehen sein. Der Kinderwagenrahmen kann ggf. in mehr als nur zwei Rahmenstellungen verbracht werden. Vorzugsweise sind zumindest eine erste und eine zweite Rahmenstellung arretierbar, ggf. können auch eine oder mehrere weitere Rahmenstellung(en) (Zwischen-Rahmenstellung/en) arretierbar (verriegelbar) sein.

Erstes bzw. zweites Rahmenteil sind vorzugsweise als Profil ausgebildet und/oder werden durch einen Schaft und/oder ein Rohr gebildet und/oder weisen einen (ggf. über die Länge konstanten) runden oder vieleckigen, insbesondere viereckigen, Querschnitt auf. Das erste bzw. zweite Rahmenteil kann beispielsweise einen Schieberschaft oder eine Radstrebe (Hinterradstrebe bzw. Vorderradstrebe) zumindest teilweise ausbilden. Erstes und zweites Rahmenteil sind vorzugsweise an verschiedenen Elementen der Gruppe von Schieberschaft, Hinterradstrebe und Vorderradstrebe angeordnet, können jedoch auch am selben Element angeordnet sein (beispielsweise wenn es darum geht, einen Schieberschaft in sich zusammenzufalten).

Unter einem Klappen von erstem und zweitem Rahmenteil ist insbesondere ein Vorgang zu verstehen, bei dem erstes und zweites Rahmenteil gelenkig miteinander verbunden sind und distale Enden der beiden Rahmenteile (durch Schwenken) einander angenähert werden (Zusammenklappen) oder voneinander entfernt werden (Aufklappen). Im zusammengeklappten Zustand können erstes und zweites Rahmenteil einen Winkel zueinander aufweisen, der geringer ist als 20°, vorzugsweise geringer als 10°, ggf. können erstes und zweites Rahmenteil (zumindest im Wesentlichen) parallel ausgerichtet sein (also einen "Winkel" von 0° aufweisen). Im aufgeklappten Zustand ist der Winkel vorzugsweise größer als 20°, weiter vorzugsweise größer als 30°, ggf. größer als 45° oder größer als 90° (je nach konkreter Anwendung).

Die erste Verriegelungseinrichtung kann die einzige Verriegelungseinrichtung sein (so dass "erste" also nicht impliziert, dass auch noch eine weitere, "zweite" Verriegelungseinrichtung vorgesehen sein muss). Es können jedoch auch noch weitere Verriegelungseinrichtungen vorgesehen sein. Bei diesen weiteren Verriegelungseinrichtungen kann es sich in dem Sinne auch um "erste" Verriegelungseinrichtungen handeln, wenn sie analog zur ersten Verriegelungseinrichtung konfiguriert sind, beispielsweise am ersten Rahmenteil oder einem weiteren (identisch oder spiegelbildlich aufgebauten ersten Rahmenteil) angeordnet (bzw. mit diesem verbunden) sind.

Auch am zweiten Rahmenteil kann eine entsprechende ("zweite") Verriegelungseinrichtung angeordnet (mit dem zweiten Rahmenteil verbunden) sein. Diese zweite Verriegelungseinrichtung kann dann wie die erste Verriegelungseinrichtung ausgebildet und angeordnet sein oder abweichend zur ersten Verriegelungseinrichtung ausgebildet bzw. angeordnet sein. Es können auch mehrere derartige zweite Verriegelungseinrichtungen vorgesehen sein (oder nur eine oder eben keine).

Die erste Verriegelungseinrichtung kann mit einer entsprechenden zweiten Verriegelungseinrichtung (im zweiten Rahmenteil) zusammenwirken, um insgesamt eine Verriegelung realisieren zu können. Eine derartige zweite Verriegelungseinrichtung ist jedoch nicht unbedingt erforderlich, beispielsweise wenn die erste Verriegelungseinrichtung so ausgebildet ist, dass sie eine Verriegelung mit dem zweiten Rahmenteil per se (beispielsweise durch zumindest teilweises Umschließen des zweiten Rahmenteils) realisieren kann. Wenn eine zweite Verriegelungseinrichtung (am zweiten Rahmenteil) vorgesehen ist, ist diese zweite Verriegelungseinrichtung vorzugsweise unbeweglich gegenüber dem zweiten Rahmenteil (ggf. starr und/oder einstückig mit diesem verbunden). Die zweite Verriegelungseinrichtung kann beispielsweise einen Pin, der mit einem Haken in Eingriff bringbar ist, umfassen. Der Pin weist vorzugsweise einen überstehenden (distalen) Endabschnitt auf, vorzugsweise so dass der Haken gegen seitliches Verschieben in der Eingriffsposition gesichert ist.

Unter einer Anordnung der ersten Verriegelungseinrichtung am ersten Rahmenteil ist insbesondere zu verstehen, dass das erste Rahmenteil bei einer Änderung der Rahmenstellung bzw. Klappstellung des ersten Rahmenteils gegenüber dem zweiten Rahmenteil am ersten Rahmenteil verbleibt. Konkret kann die erste Verriegelungseinrichtung gelenkig oder translatorisch zumindest teilweise verschiebbar (beispielsweise teleskopisch) mit dem ersten Rahmenteil verbunden sein. Die Verbindung kann lösbar oder nichtlösbar (bzw. nur durch Zerstörung der Gesamtstruktur lösbar) mit dem ersten Rahmenteil verbunden sein. Wenn eine lösbare Verbindung vorliegt sind dazu vorzugsweise separate Verbindungseinrichtungen vorgesehen, die separat gelöst werden müssen (z. B. Schrauben, Stifte oder dergleichen).

Unter einer Anordnung am (ersten) Rahmenteil ist insbesondere keine Anordnung am oder in einem Gelenk zwischen erstem und zweitem Rahmenteil zu verstehen. Insofern kann die Verriegelungseinrichtung von einem Gelenk bzw. einer entsprechenden Rotationsachse beabstandet sein (vorzugsweise um mindestens 3 cm, weiter vorzugsweise mindestens 6 cm). Bei einer Messung des entsprechenden Abstands soll es vorzugsweise auf den Verbindungspunkt der ersten Verriegelungseinrichtung gegenüber dem ersten Rahmenteil ankommen. Bei dem ersten und/oder zweiten Rahmenteil handelt es sich vorzugsweise um ein (Längs-) Profil, insbesondere eine Strebe (oder ein Abschnitt einer solchen). Das Profil kann beispielsweise ein Hohlprofil sein oder einen U-förmigen bzw. C-förmigen Querschnitt aufweisen.

Der Kinderwagenrahmen kann einen (ggf. U-förmigen) Schieberabschnitt aufweisen. Dieser kann einteilig ausgebildet sein oder ggf. auch zwei Teile umfassen (die vorzugsweise beidseitig angeordnet sind). In jedem Fall können zwei (sich gegenüberliegend, ggf. parallel verlaufende) Schieberschäfte angeordnet sein, die optional durch den (insbesondere U-förmigen) oberen Schieberabschnitt verbunden sein können. Gegebenenfalls sind die (parallel verlaufenden) Schieberschäfte gegenüber dem oberen Schieberabschnitt verschwenkbar.

Der (jeweilige) Schieberschaft kann mit einer Vorderrad- und/oder Hinterradstrebe (ggf. mit den oberen Streben-Enden), die an das (jeweilige) Gelenk angekoppelt ist, verbunden sein.

Der Kinderwagenrahmen kann mindestens drei Räder aufweisen oder zumindest mindestens drei Befestigungsmöglichkeiten für entsprechende Räder.

Die oben genannte Aufgabe wird insbesondere auch durch die Merkmale des Anspruchs 16 gelöst durch einen Kinderwagen, der einen Kinderwagenrahmen, wie oben und nachfolgend beschrieben, aufweist. Dazu kann mindestens eine Sitz- und/oder Liegeeinheit vorgesehen sein und/oder mindestens eine Befestigungsmöglichkeit für eine derartige Sitz- und/oder Liegeeinheit. Die Sitz- und/oder Liegeeinheit kann integraler Bestandteil des Kinderwagens sein (beispielsweise fest mit dem Kinderwagenrahmen verbunden sein) oder lösbar in einem entsprechenden Kinderwagenrahmen angeordnet sein (und ggf. ausgetauscht werden).

Vorzugsweise ist die Stellungsüberführungseinrichtung derart konfiguriert, dass eine Stellungsüberführung selbsttätig, weiter vorzugsweise mittels einer mechanischen Kopplung zwischen mindestens einem Rahmenteil (das insbesondere nicht das erste Rahmenteil ist, also beispielsweise das zweite oder ein/das dritte/s Rahmenteil) und der Stellungsüberführungseinrichtung, erfolgt, wenn (falls bzw. sobald) ein Aufklappen und/oder wenn (falls bzw. sobald) ein Zusammenklappen der beiden Rahmenteile erfolgt. Insbesondere soll also ein Aufklappen bzw. Zusammenklappen bewirken, dass eine automatische (selbsttätige) Stellungsüberführung erfolgt.

Die Stellungsüberführung (in zeitlicher Hinsicht) kann während des Aufklappens bzw. Zusammenklappens erfolgen (über zumindest einem Abschnitt des jeweiligen Vorgangs in zeitlicher Hinsicht) oder zumindest durch Aufklappen bzw. Zusammenklappen ausgelöst (getriggert) werden (und beispielsweise erst erfolgen, wenn das Zusammenklappen an sich beendet ist (es kann also auch ein Delay vorgesehen sein). Bevorzugt ist jedoch, wenn sich Aufklappen bzw. Zusammenklappen und die Stellungsüberführung als solche zumindest zeitlich überlappen oder die Stellungsüberführung innerhalb des Zeitraums liegt, der durch Aufklappen bzw. Zusammenklappen definiert ist. Vorzugsweise erfolgt zumindest ein (insbesondere ein strecken- bzw. winkelmäßig überwiegender) Teil der Stellungsüberführung nach einem Entriegelungsvorgang bzw. vor einem Einrast- bzw. Einschnappvorgang (zur Verriegelung).

Die Stellungsüberführung kann mechanisch (durch eine mechanische Kopplung) gesteuert werden und/oder elektrisch bzw. elektronisch (wobei in diesem Fall entsprechende Sensoren vorgesehen sein können). Unter einer mechanischen Kopplung ist insbesondere eine (mechanische) Wirkverbindung zu verstehen, bei der ein Auf- bzw. Zusammenklappen der Rahmenteile dazu führt, dass eine entsprechende Stellungsüberführung erfolgt. Dazu ist (zeitweise) eine entsprechende mittelbare oder unmittelbare Verbindung zwischen mindestens einem der Rahmenteile der Stellungsüberführungseinrichtung bzw. der Verriegelungseinrichtung ausgebildet.

Insgesamt kann durch einen automatischen Mechanismus auf besonders einfache Art und Weise eine Stellungsüberführung erfolgen, was die Bedienung vereinfacht.

Die Verriegelungseinrichtung steht vorzugsweise in der ersten Stellung von dem ersten Rahmenteil vor. Alternativ oder zusätzlich steht die Verriegelungseinrichtung in einer zweiten Stellung von dem ersten Rahmenteil nicht vor (liegt an) oder steht (zumindest) weniger weit vor als in der ersten Stellung. Unter einem derartigen Vorstehen (Vorspringen) ist insbesondere zu verstehen, dass ein distales Ende der Verriegelungseinrichtung (bzw. eines beweglichen Teils derselben) einen Abstand von einer Außenfläche des Rahmenteils aufweist bzw. einen größeren Abstand zu der Außenfläche des Rahmenteils aufweist als ein proximales Ende. Als entsprechender Abstand ist hier insbesondere der minimale Abstand zu verstehen (der üblicherweise durch eine senkrechte Linie zwischen distalen bzw. proximalen Ende der Verriegelungseinrichtung und Außenfläche des Rahmenteils definiert sein sollte). Vorzugsweise steht die Verriegelungseinrichtung in der ersten Stellung um mindestens 1 cm, weiter vorzugsweise mindestens 3 cm weiter vor als in der zweiten Stellung. Alternativ oder zusätzlich kann das Rahmenteil in der zweiten Stellung um mindestens 30 %, vorzugsweise mindestens 60 %, noch weiter vorzugsweise mindestens 90 %, ggf. 100 % weniger weit vorstehen als in der ersten Stellung.

Unter einem Anliegen der Verriegelungseinrichtung in der zweiten Stellung an dem ersten Rahmenteil ist insbesondere ein flächiges Anliegen zu verstehen, ggf. kann die Verriegelungseinrichtung bündig mit einer Oberfläche des Rahmenteils abschließen.

Bei der Verriegelungseinrichtung (oder dem beweglichen Teil derselben) kann es sich um ein längliches Element handeln, insbesondere in dem Sinne, dass eine Längserstreckung mindestens 2-mal, vorzugsweise mindestens 4-mal so groß ist, wie eine Erstreckung in Breitenrichtung (quer zur Längsrichtung). Beispielsweise kann die Verriegelungseinrichtung (oder der bewegliche Teil derselben) als Hebel oder zumindest hebelartig, insbesondere schnapphebelartig, ausgebildet sein.

Die erste Stellung der Verriegelungsvorrichtung ist eine Funktionsstellung, insbesondere derart, dass in der ersten Stellung eine Verriegelung vorliegt oder herstellbar ist (und zwar vorzugsweise ohne weitere Stellungsänderung der Verriegelungseinrichtung, die über den eigentlichen Verriegelungsvorgang, wie beispielsweise ein Einschnappen oder Einrasten hinausgeht). Die zweite Stellung der Verriegelungseinrichtung ist eine Ruhestellung, insbesondere derart, dass in der zweiten Stellung keine Verriegelung vorliegt oder herstellbar ist (was insbesondere bedeutet, dass eine Verriegelung strukturell bzw. geometrisch ausgeschlossen ist, selbst wenn die beiden Rahmenteile, falls dies überhaupt unabhängig von der Stellungsänderung der Verriegelungseinrichtung möglich ist, in einer Stellung sind, in der sie eigentlich verriegelt werden sollen).

In Ausführungsformen ist die Verriegelungseinrichtung verschwenkbar. In diesem Fall ist ein Winkel zwischen Verriegelungseinrichtung (bzw. verschwenkbarem Teil derselben) und erstem Rahmenteil in der ersten Stellung vorzugsweise größer als in der zweiten Stellung, beispielsweise um mindestens 10°, vorzugsweise mindestens 30°, ggf. mindestens 60° oder (zumindest annähernd) 90° oder größer. Dadurch kann auf einfache Art und Weise eine Einstellung einer vergleichsweise flachen Stellung der Verriegelungseinrichtung erzielt werden.

In weiteren Ausführungsformen kann die Verriegelungseinrichtung verschiebbar (zumindest abschnittsweise bzw. teilweise translatorisch bewegbar) sein, wobei ein Abstand zwischen einem distalen Ende der Verriegelungseinrichtung und dem ersten Rahmenteil in der ersten Stellung vorzugsweise größer ist als in der zweiten Stellung. Vorzugsweise ist der Abstand in der zweiten Stellung um mindestens 10 %, vorzugsweise mindestens 30 %, noch weiter vorzugsweise mindestens 80 %, ggf. (zumindest annähernd) 100 % geringer als der Abstand in der ersten Stellung.

Das erste Rahmenteil kann zumindest einen Teil eines Schieberschaftes oder einer Radstrebe (eines Radbeines), insbesondere Hinterradstrebe (Hinterradbeines) oder Vorderradstrebe (Vorderradbeines) ausbilden. Alternativ oder zusätzlich kann das zweite Rahmenteil zumindest einen Teil eines Schieberschaftes oder einer Radstrebe, insbesondere Hinterradstrebe (Hinterradbeines) oder Vorderradstrebe (Vorderradbeines) ausbilden. In anderen Ausführungsformen kann das erste Rahmenteil und/oder das zweite Rahmenteil eine Zwischenstrebe oder Verbindungsstrebe des Kinderwagenrahmens ausbilden.

Vorzugsweise sind erstes und zweites Rahmenteil nicht Teile desselben Elementes., Beispielsweise ist das zweite Rahmenteil nicht ebenfalls ein Teil eines Schieberschaftes (bzw. einer bestimmten Strebe, wie beispielsweise Radstrebe oder Zwischenstrebe oder Verbindungsstrebe), wenn das erste Rahmenteil ein Teil eines Schieberschaftes (bzw. der bestimmten Strebe) ist (dies kann jedoch sein, wie oben erläutert). Besonders bevorzugt ist das erste Rahmenteil eine Radstrebe (Hinterradstrebe) und das zweite Rahmenteil ein Schieberschaft (oder Teil desselben).

Vorzugsweise ist die Verriegelungseinrichtung (bzw. ein Verbindungspunkt/ Verbindungsbereich derselben gegenüber dem Rahmenteil) in der Nähe eines Faltgelenkes zwischen erstem und zweitem Rahmenteil angeordnet, insbesondere in einem Abstand von weniger als 30 cm, weiter vorzugsweise weniger als 15 cm zu diesem Faltgelenk bzw. einer Rotationsachse (die die Rotation bzw. Verschwenkung zwischen erstem und zweitem Rahmenteil definiert).

In einer konkreten Ausführungsform kann die Verriegelungseinrichtung (insbesondere an ihrem distalen Ende) eine (sich vorzugsweise verjüngende und/oder abgefaste und/oder einschnappbare) Arretiereinrichtung, insbesondere einen Haken, aufweisen. Bei der Arretiereinrichtung (dem Haken) kann es sich insbesondere um eine Schnappeinrichtung handeln, bei der eine Arretierung durch Einschnappen der Arretiereinrichtung bzw. des Hakens realisiert wird. Hierdurch kann auf einfache Art und Weise eine Verriegelung durchgeführt werden.

Am zweiten Rahmenteil kann eine zweite Verriegelungseinrichtung angeordnet sein, die vorzugsweise mit der ersten Verriegelungseinrichtung zusammenwirkt (oder alternativ separat gegenüber dieser wirkt). Die zweite Verriegelungseinrichtung kann gegenüber dem zweiten Rahmenteil unbeweglich sein (beispielsweise starr an diesem angeordnet sein, ggf. unlösbar). Die zweite Verriegelungseinrichtung steht vorzugsweise nur geringfügig (oder nicht) von dem zweiten Rahmenteil vor, beispielsweise um weniger als 2 cm oder weniger als 1 cm. Alternativ oder zusätzlich kann die Verriegelungseinrichtung ggf. direkt mit dem zweiten Rahmenteil zusammenwirken bzw. entsprechend konfiguriert sein.

Die erste Verriegelungseinrichtung kann (in zumindest einer, insbesondere der ersten Stellung) um mindestens 2 cm, vorzugsweise mindestens 4 cm von dem ersten Rahmenteil vorstehen.

In Ausführungsformen kann ein (das) Gelenk zwischen erstem und zweitem Rahmenteil zugleich auch ein Gelenk zum Klappen eines dritten Rahmenteils ausbilden. In alternativen Ausführungsformen kann ein weiteres Gelenk vorgesehen sein, über das ein drittes Rahmenteil gegenüber dem ersten und/oder zweiten Rahmenteil klappbar ist, wobei das weitere Gelenk vorzugsweise in räumlicher Nähe zu dem Gelenk zwischen erstem und zweitem Rahmenteil ist. Unter einer räumlichen Nähe ist insbesondere zu verstehen, dass durch die Gelenke definierte Rotationsachsen einen Abstand zueinander aufweisen, der geringer als 10 cm, vorzugsweise geringer als 5 cm ist. Eventuell können jedoch auch die Rotationsachsen einen Abstand aufweisen, der größer ist (beispielsweise größer als 10 cm oder größer als 20 cm).

Ein (das) Gelenk kann eine Bogenkontur, insbesondere Sichelkontur, aufweisen, entlang der es vorzugsweise mit dem ersten und/oder dem zweiten Rahmenteil verbunden ist. Dadurch kann das Gelenk vorzugsweise auch (zumindest teilweise) eine Aufnahmeeinrichtung für eine Sitz- und/oder Liegeeinheit bilden.

Die erste Verriegelungseinrichtung ist ausführungsgemäß zumindest in einer Stellung (insbesondere der zweiten Stellung, ggf. alternativ oder zusätzlich in der ersten Stellung) durch eine Federeinrichtung vorgespannt. Dadurch kann auf einfache Art und eine Rückführung in zumindest eine der beiden Stellungen ermöglicht werden. Der umgekehrte Weg kann dann beispielsweise durch eine entsprechende Rampe und/oder Kulisse erfolgen oder zumindest unterstützt werden.

Im Allgemeinen ist bevorzugt, dass die Stellung der Überführungseinrichtung mindestens eine Führungs-, insbesondere Gleiteinrichtung, vorzugsweise Anlaufschräge (Rampe) und/oder Kulissenführung und/oder Schienenführung umfasst, vorzugsweise derart, dass ein Klappvorgang automatisch eine Stellungsüberführung zur Folge hat. Dadurch kann auf einfache Art und Weise eine Stellungsüberführung realisiert werden. Ausführungsgemäß kann die Führungseinrichtung (insbesondere Rampe und/oder Kulissenführung) zum Ermöglichen der Überführung von der ersten Stellung in die zweite Stellung (bzw. umgekehrt) zumindest teilweise als Bestandteil eines dritten Rahmenteils vorgesehen sein bzw. mit einem dritten Rahmenteil (starr und/oder unmittelbar) verbunden sein.

Die erste Verriegelungseinrichtung kann zumindest teilweise entfernbar sein.

Alternativ oder zusätzlich kann die erste Verriegelungseinrichtung zumindest teilweise in einem Gehäuse untergebracht sein bzw. in zumindest einer Stellung, insbesondere der zweiten Stellung (Ruhestellung) unterbringbar sein. Alternativ oder zusätzlich kann die erste Verriegelungseinrichtung zumindest teilweise innerhalb des ersten Rahmenteils versenkt oder versenkbar sein. Beispielsweise kann die erste Verriegelungseinrichtung in der zweiten Stellung teilweise (vorzugsweise zu zumindest 50 Vol.-%, weiter vorzugsweise zu zumindest 90 Vol.-%) oder vollständig innerhalb des ersten Rahmenteils versenkt sein

Die oben genannte Aufgabe wird weiterhin gelöst durch ein Verfahren gemäß Anspruch 17.

Offenbart wird auch ein Verfahren zum Zusammen- und/oder Aufklappen eines Kinderwagenrahmens, vorzugsweise der obigen Art, umfassend die Schritte:
- Auf- bzw. Zusammenklappen eines ersten Rahmenteils gegenüber einem zweiten Rahmenteil;
- Verriegeln bzw. Entriegeln einer Klappstellung zwischen dem ersten und dem zweiten Rahmenteil mittels einer am ersten Rahmenteil angeordneten Verriegelungseinrichtung und
- Überführen der Verriegelungseinrichtung von einer ersten Stellung in eine zweite Stellung in Bezug auf das erste Rahmenteil,
wobei die zeitliche Reihenfolge der Schritte nicht notwendigerweise festgelegt ist (aber durch die oben genannte Reihenfolge optional festgelegt sein kann).

Weitere Verfahrensmerkmale ergeben sich aus der obigen Beschreibung, insbesondere den erläuterten funktionalen Merkmalen) des Kinderwagenrahmens bzw. Kinderwagens.

Insgesamt kann eine optische saubere und aufgeräumte Lösung für eine Verriegelung einer Klappstellung eines Kinderwagenrahmens erzielt werden. Es liegt vorzugsweise zumindest eine gewisse Sicherung vor gegen versehentliches Abbrechen oder ähnliche Beschädigungen. Die Handhabung ist insbesondere selbsterklärend bzw. intuitiv.

Insgesamt wird eine einfache und praktische Lösung vorgeschlagen, wobei insbesondere ein sicherer Halt der Aufbewahrungslösung gewährleistet ist. Gegebenenfalls können zusätzliche Lösemechanismen (Bauteile), wie beispielsweise Pedal, entfallen, was zu einer zusätzlichen Kosten- und Gewichtsoptimierung führt. Im Allgemeinen können lästige (manuelle) Arbeitsschritte durch den Benutzer reduziert werden.

Es kann eine stehende (ggf. arretierbare) Aufbewahrungsposition ermöglicht sein, die dem Benutzer eine einhändige, stehende Transport- und Trageposition ermöglicht (beispielsweise wie in DE 10 2014 110 215 A1 beschrieben).

Es kann/können genau eine oder mehrere Verriegelungseinrichtungen vorgesehen sein bzw. es kann zumindest an einer Seite, ggf. an beiden Seiten eine entsprechende erste Verriegelungseinrichtung vorgesehen sein.

Eine ggf. vorgesehene Arretiereinrichtung kann (anstelle oder zusätzlich zu einem Haken) einen (z. B. vorgespannten) Pin umfassen.

Es können elektrische und/oder mechanische und/oder akustische Indikatoren vorgesehen sein, die beispielsweise eine verriegelte Position kennzeichnen (z. B. durch ein Klick-Geräusch).

Im Allgemeinen kann erfindungsgemäß ein Sicherungselement (Haken) durch eine am Gelenk fixierte Gleitrampe von einer Ruhestellung in eine Funktionsstellung rotiert werden. Dabei kann das Sicherungselement von einer (im Wesentlichen) Parallelstellung zum Rahmenabschnitt in eine (nahezu) senkrechte Stellung zum Rahmenabschnitt rotiert werden. Die Funktionsstellung kann automatisch durch die Beendigung des Faltvorgangs erreicht werden. Das Sicherungselement (Haken) kann beispielsweise durch eine Feder vorgespannt sein. Ein oberes Ende des Sicherungselementes (z. B. Hakenkopf) kann derart abgefast sein, dass der Haken automatisch über das herausragende Gegenstück rutscht und somit seine eigentliche Funktionsstellung erreicht. Eine Gleitrampe kann einen zum Sicherungselement zeigenden keilförmigen Abschnitt aufweisen.

Eine Gebrauchsstellung des Kinderwagenrahmens (aufgefaltete Stellung) kann dadurch erkennbar sein, dass Vorder- und Hinterbein (Vorder- und Hinterradstrebe) in einem maximalen Abstand zueinander sind. Ein Schieberabschnitt kann eine (nahezu) parallele Linie mit der Vorderstrebe (dem Vorderbein) bilden. Die Verriegelungseinrichtung kann in diesem Fall nicht in Eingriff sein und kann in einer Ruhestellung verharren. Ein starres Sicherungselement (Gleitrampe) kann ein bewegliches Sicherungselement (Haken) in eine federgelagerte vorgespannte Position zwingen. Ein bewegliches Sicherungselement (Haken) kann in einer vorgespannten Position sein. Ein starrer Sicherungszapfen kann sich an einem entferntesten Punkt befinden (nämlich beispielsweise am Schieberabschnitt).

In der Aufbewahrungsstellung (zusammengefalteten Stellung des Kinderwagenrahmens) können Schieberabschnitt, Vorder- und Hinterbein (Vorder- und Hinterradstrebe) in einem minimalen Abstand zueinander bzw. (nahezu) maximal aufeinander zubewegt sein, wobei auch eine zusätzliche Zwischenposition denkbar ist. Die Verriegelungseinrichtung kann in Eingriff sein und in einer Funktionsstellung verharren. Ein starres Sicherungselement (Gleitrampe) kann so verschoben und/oder verdreht sein, dass ein bewegliches Sicherungselement seine vorgespannte Position verlässt (verlassen kann) und im Raum steht. Das bewegliche Sicherungselement (Haken) kann seine vorgespannte Position verlassen und in den Raum ragen. Ein starrer Sicherungszapfen kann sich am nahegelegensten Punkt befinden, nämlich vorzugweise in Eingriff mit dem beweglichen Sicherungselement.

Ein Verfahren zum Verbringen des Kinderwagenrahmens in eine Aufbewahrungsstellung kann wie folgt ablaufen. Zunächst kann der Faltvorgang durch Lösen möglicher Arretierungen der Gebrauchsstellung des Rahmens (Gestells) eingeleitet werden. Ein Schieberschaft kann daraufhin in Richtung eines (unteren) Beinabschnitts gedrückt werden bzw. geschoben werden. Daraufhin oder (zumindest teilweise) zeitlich überlappend kann eine Verschwenkung einer oberen Schiebereinheit in Richtung eines hinteren Beinabschnitts erfolgen. Dabei kann eine Drehbewegung eines Gelenks (zwischen erstem und zweitem Rahmenteil) mit einhergehen, so dass sich beispielsweise eine Gleitrampe automatisch (selbsttätig) mit verdreht. Dabei kann eine Verdrängung bzw. Verdrehung eines Sicherungshakens (in die erste Stellung bzw. Arretierstellung) durch eine Federkraft einer Federeinrichtung unterstützt werden, so dass der Sicherungshaken ausfährt, bis er final die erste Stellung (Arretierstellung) einnimmt (bzw. in diese einschnappt). Bei einem Zurückführen (in die zweite Stellung) kann die Federeinrichtung dann wieder gespannt werden. Alternativ (oder zusätzlich, z. B. wenn eine weitere Federeinrichtung vorgesehen ist), kann die Überführung des Sicherungshakens in die zweite Stellung durch eine Federkraft einer Federeinrichtung unterstützt werde, wobei diese Federeinrichtung dann ggf. beim Zurückführen in die erste Stellung gespannt wird.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine Frontansicht eines erfindungsgemäßen Kinderwagenrahmens;
- Fig. 2: einen Schnitt entlang der Linie II-II in Fig. 1;
- Fig. 3: eine Darstellung gemäß Fig. 2 mit weiteren Details;
- Fig. 4: eine Vergrößerung des Ausschnitts A in Fig. 3;
- Fig. 5: einen Ausschnitt des erfindungsgemäßen Kinderwagenrahmens gemäß Fig. 1 in einer Schrägansicht (teilweiser Explosionsdarstellung);
- Fig. 6: eine vergrößerte Darstellung des Ausschnitts B in Fig. 5;

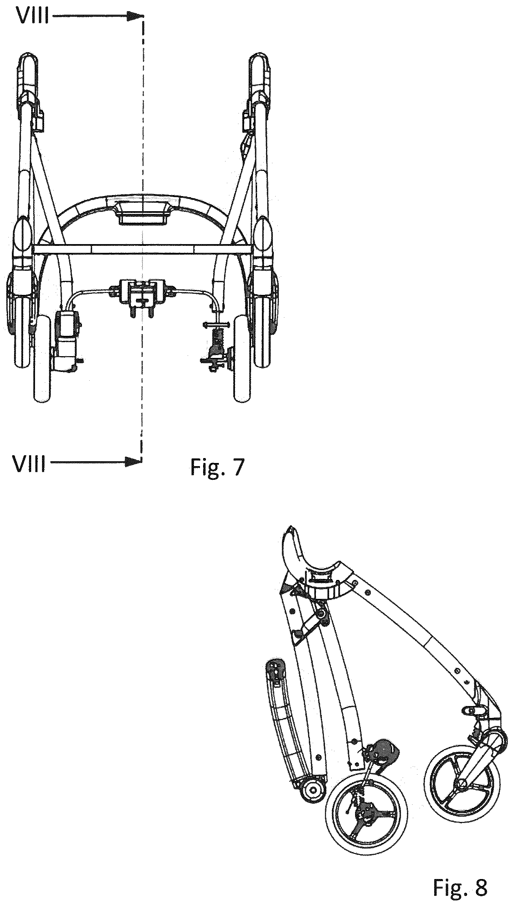

- Fig. 7: einen Ausschnitt des Kinderwagenrahmens gemäß Fig. 1 in einer Frontansicht;
- Fig. 8: den Ausschnitt gemäß Fig. 7 entlang der Schnittlinie VIII-VIII in Fig. 7;
- Fig. 9: eine Darstellung analog Fig. 8 mit weiteren Details;
- Fig. 10: eine vergrößerte Darstellung des Ausschnitts C in Fig. 9.

In der nachfolgenden Beschreibung werden für gleiche und gleichwirkende Teile dieselben Bezugsziffern verwendet.

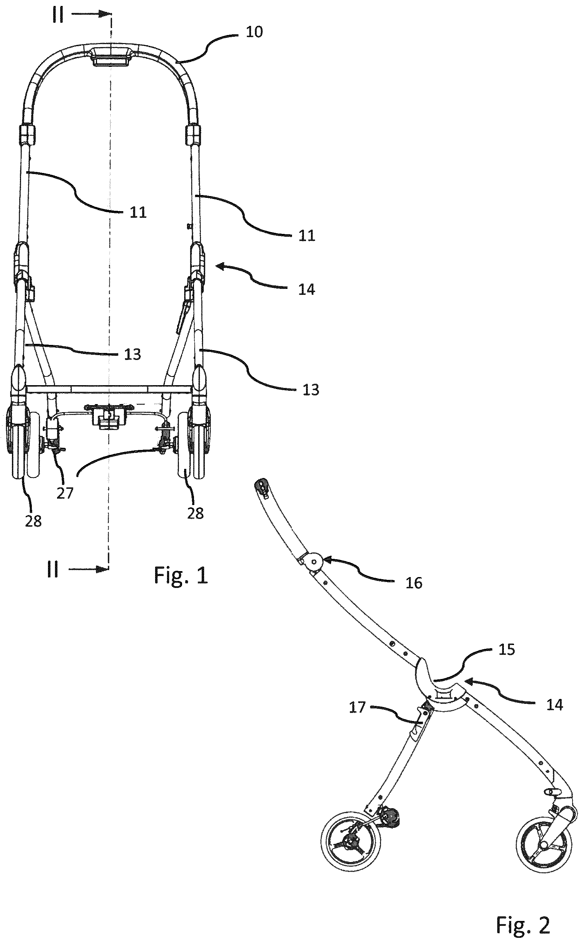

Fig. 1 zeigt einen erfindungsgemäßen Kinderwagenrahmen. Dieser weist einen Schieberabschnitt 10, zwei Schieberschäfte 11 (jeweils auch zweites Rahmenteil genannt), zwei Hinterradstreben 12 (jeweils auch erstes Rahmenteil genannt), zwei Vorderradstreben 13 (jeweils auch drittes Rahmenteil genannt) sowie zwei Hinterräder 27 und Vorderräder 28 auf. Der jeweilige Schieberabschnitt 11, die jeweiligen Hinterradstrebe 12 und die jeweilige Vorderradstrebe 13 sind über ein Gelenk 14 (siehe auch Fig. 2) miteinander gelenkig verbunden. Das Gelenk 14 weist einen bogenförmigen bzw. sichelförmigen Abschnitt 15 auf, in dem beispielsweise eine Sitz- und/oder Liegeeinheit aufgenommen werden kann.

Der Schieberabschnitt 10 ist gegenüber den beiden Schieberschäften 11 um ein Schiebergelenk 16 gelenkig miteinander verbunden.

Insoweit es im Folgenden um eine gelenkige Verbindung zwischen jeweiligem Schieberabschnitt 11 (in dieser Ausführungsform: zweites Rahmenteil) und jeweiliger Hinterradstrebe 12 (in dieser Ausführungsform: erstes Rahmenteil) geht, können die Ausführungen für beide Paare von Schieberabschnitten 11 sowie Hinterradstreben 12 gelten oder nur für ein Paar. Grundsätzlich ist es zwar in der Ausführungsform so vorgesehen, jedoch im Allgemeinen nicht zwingend, dass hier stets eine doppelte Ausführung von Schieberabschnitt 11 bzw. Hinterradstrebe 12 (oder auch Vorderradstrebe 13) vorliegt. Insofern ist diese doppelte Ausführung im Rahmen der nachfolgenden Erläuterungen nur optional. Weiterhin gelten sämtliche nachfolgenden Erläuterungen der gelenkigen Verbindung (bzw. des Faltens bzw. Klappens) von Schieberabschnitt 11 gegenüber Hinterradstrebe 12 auch allgemein für den Fall, dass es sich beim Schieberabschnitt 11 um (irgendein) zweites Rahmenteil und bei der Hinterradstrebe 12 um (irgendein) Rahmenteil handelt. Auch insofern ist hier die konkrete Ausführung als Schieberabschnitt 11 bzw. Hinterradstrebe 12 wiederum nur optional.

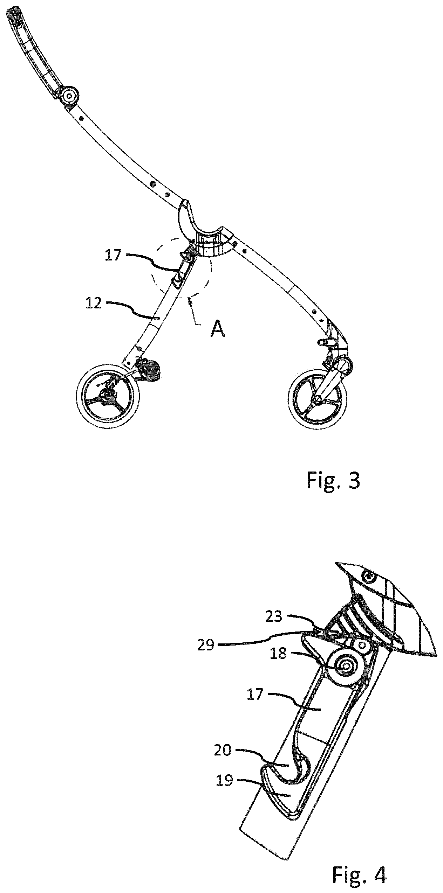

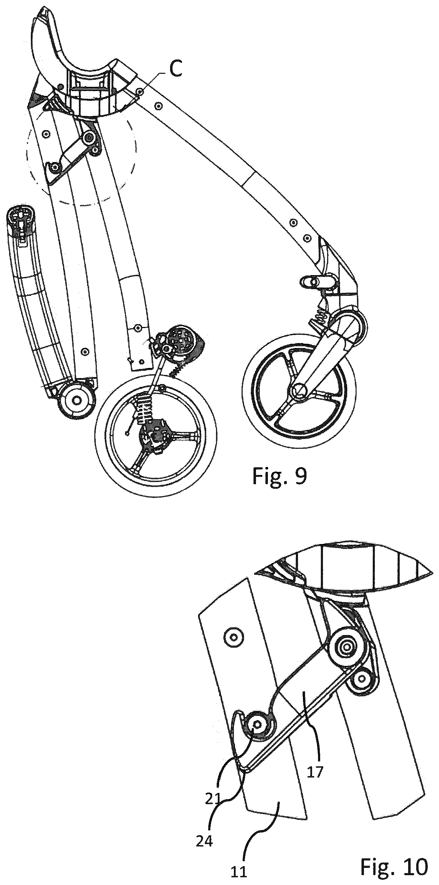

Wie in den Fig. 1-4 erkennbar, ist der Hinterradstrebe 12 eine Verriegelungseinrichtung 17 (siehe insbesondere Fig. 4) zugeordnet, die gegenüber der Hinterradstrebe 12 schwenkbar gelagert ist, und zwar um eine Rotationsachse 18 (siehe Fig. 4). Dadurch kann die Verriegelungseinrichtung 17 von ihrer Stellung gemäß Fig. 3 und 4 in die Stellung gemäß Fig. 9 und 10 verschwenkt werden. Konkret umfasst die Verriegelungseinrichtung 17 einen Haken 19 mit einer entsprechenden Ausnehmung 20. Dadurch kann der Haken 19 (über die Ausnehmung 20) in Eingriff mit einem Pin 21 (siehe Fig. 10) an dem Schieberschaft 11 gebracht werden.

Wie man erkennt, liegt die Verriegelungseinrichtung 17 (bzw. der Haken 19) in Fig. 4 (der Gebrauchsstellung des Gestelles) an der Hinterradstrebe 12 an, in Fig. 9 und 10 (der Transportstellung des Gestelles) steht er von der Hinterradstrebe 12 ab.

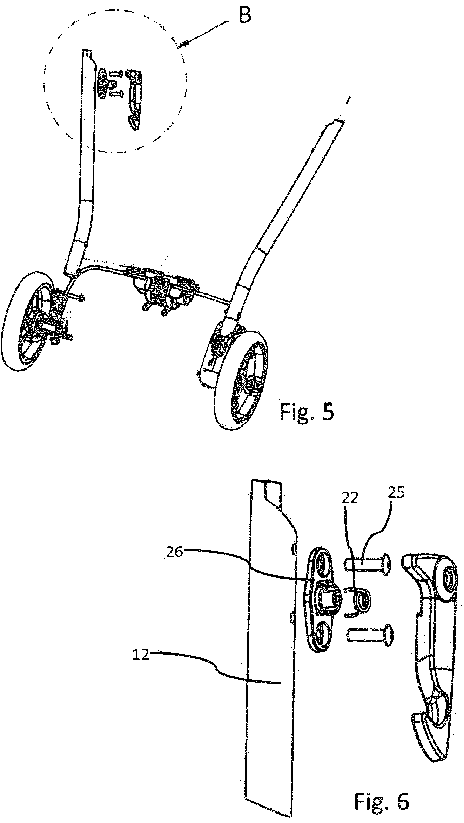

Eine in Fig. 5 und 6 gezeigte Federeinrichtung 22 ist derart konfiguriert und angeordnet, dass sie einer Rotation der Verriegelungseinrichtung 17 aus ihrer Stellung gemäß Fig. 10 in die Stellung gemäß Fig. 4 entgegenwirkt (bzw. die umgekehrte Rotation unterstützt bzw. bewirkt). Ausgehend von der Stellung gemäß Fig. 4 zwingt eine Stellungsüberführungseinrichtung 29, umfassend eine Rampe 23, die Verriegelungseinrichtung 17 in Richtung der Stellung gemäß Fig. 10 (mittels der Federkraft der Federeinrichtung 22), so dass die Verriegelungseinrichtung 17 im zusammengeklappten Zustand (über Ausnehmung 20 und Pin 21) eine Verriegelung zwischen Schaftabschnitt 11 und Hinterradstrebe 12 realisieren kann. Die Rampe 23 ist hier (was nicht zwingend ist) starr mit der zugeordneten Vorderradstrebe 13 (dem dritten Rahmenteil) verbunden.

In dem Zustand gemäß Fig. 10 ist die Verriegelungseinrichtung 17 in einer Verriegelungsstellung. Hinterradstrebe 12 und Schieberschaft 11 sind dabei gegeneinander arretiert. Um die Arretierung aufzulösen, kann nun ein distales Ende 24 der Verriegelungseinrichtung 17 (siehe Fig. 10) von dem Pin 21 (z. B. manuell) wegbewegt werden (weggedrückt werden), so dass dann der Kinderwagenrahmen wieder aufgefaltet werden kann. Dabei wird die Federeinrichtung 22 gespannt und die Verriegelungseinrichtung 17 nimmt wieder ihre Stellung gemäß Fig. 4 ein.

Wie aus Fig. 6 erkennbar, können (lösbare) Befestigungseinrichtungen 25 (z. B. Schrauben) vorgesehen sein, um die Verriegelungseinrichtung 17 (lösbar) am ersten Rahmenteil (Hinterradstrebe) zu befestigen. Insbesondere dieses Merkmal ist jedoch nur optional. Konkret kann dazu ein Zwischenelement 26 (Zwischenplatte) vorgesehen sein, an dem wiederum die Verriegelungseinrichtung 17 befestigt bzw. befestigbar ist, wobei dieses Zwischenelement 26 über die Befestigungseinrichtung 25 so an der Hinterradstrebe 12 befestigt werden kann, dass es per se nicht drehbeweglich ist.

Gegebenenfalls kann ein Zwischenelement 26 an der Federeinrichtung 22 angeordnet sein, konkret zwischen Hinterradstrebe 12 und Verriegelungseinrichtung 17 (siehe Fig. 6). Dadurch kann auf einfache Art und Weise eine Demontage der Verriegelungseinrichtung 17 von der Hinterradstrebe 12 erfolgen (beispielsweise wenn ein Verrasten in der Transportstellung nicht erwünscht ist).

### Bezugszeichenliste

- 10: Schieberabschnitt
- 11: Schieberschaft (zweites Rahmenteil)
- 12: Hinterradstrebe (erstes Rahmenteil)
- 13: Vorderradstrebe (drittes Rahmenteil)
- 14: Gelenk
- 15: Bogenförmiger Abschnitt
- 16: Schiebergelenk
- 17: Verriegelungseinrichtung
- 18: Rotationsachse
- 19: Haken
- 20: Ausnehmung
- 21: Pin
- 22: Federeinrichtung
- 23: Rampe
- 24: Distales Ende
- 25: Befestigungseinrichtung
- 26: Zwischenelement
- 27: Hinterrad
- 28: Vorderrad
- 29: Stellungsüberführungseinrichtung

## Patentansprüche

1. Kinderwagenrahmen (1), der reversibel aus einer ersten Rahmenstellung, nämlich einer aufgefalteten Stellung, in eine zweite Rahmenstellung, nämlich eine zusammengefalteten Stellung, überführbar ist, umfassend ein erstes Rahmenteil (12) sowie ein zweites Rahmenteil (11), die gegeneinander klappbar sind, eine am ersten Rahmenteil (12) angeordnete erste Verriegelungseinrichtung (17) zum Verriegeln einer Klappstellung des ersten Rahmenteils (12) relativ zum zweiten Rahmenteil (11) sowie eine Stellungsüberführungseinrichtung (29) zum Überführen der ersten Verriegelungseinrichtung (17) von einer ersten Stellung gegenüber dem ersten Rahmenteil (12) in eine davon verschiedene zweite Stellung gegenüber dem ersten Rahmenteil (12), wobei die erste Stellung der Verriegelungseinrichtung (17) eine Funktionsstellung ist, bei der die Verriegelungseinrichtung (17) im Eingriff ist, wobei die zweite Stellung der Verriegelungseinrichtung (17) eine Ruhestellung ist, bei der die Verriegelungseinrichtung (17) nicht im Eingriff ist, wobei, wenn der Kinderwagenrahmen in der zusammengefalteten Stellung ist, die Verriegelungseinrichtung (17) sich in der ersten Stellung befindet, und, wenn der Kinderwagenrahmen in der aufgefalteten Stellung ist, die Verriegelungseinrichtung (17) sich in der zweiten Stellung befindet.

2. Kinderwagenrahmen (1) nach Anspruch 1,
**dadurch gekennzeichnet, dass**
die Stellungsüberführungseinrichtung (29) derart konfiguriert ist, dass eine Stellungsüberführung der Verriegelungseinrichtung (17) selbsttätig, vorzugsweise mittels einer mechanischen Kopplung zwischen mindestens einem Rahmenteil (12, 13) und der Stellungsüberführungseinrichtung (29), erfolgt, wenn ein Aufklappen und/oder wenn ein Zusammenklappen der beiden Rahmenteile (11, 12) erfolgt.

3. Kinderwagenrahmen nach Anspruch 1 oder 2,
**dadurch gekennzeichnet, dass**
die Verriegelungseinrichtung (17) in der ersten Stellung von dem ersten Rahmenteil (12) vorsteht und/oder in der zweiten Stellung an dem zweiten Rahmenteil (11) anliegt oder weniger weit vorsteht als in der ersten Stellung.

4. Kinderwagenrahmen nach einem der vorhergehenden Ansprüche,
**dadurch gekennzeichnet, dass**
die erste Stellung der Verriegelungseinrichtung (17) eine Funktionsstellung ist, vorzugsweise derart, dass in der ersten Stellung eine Verriegelung vorliegt oder herstellbar ist und/oder die zweite Stellung der Verriegelungseinrichtung (17) eine Ruhestellung ist, vorzugsweise derart, dass in der zweiten Stellung keine Verriegelung vorliegt oder herstellbar ist.

5. Kinderwagenrahmen nach einem der vorhergehenden Ansprüche,
**dadurch gekennzeichnet, dass**
die Verriegelungseinrichtung (17) verschwenkbar ist, wobei ein Winkel zwischen Verriegelungseinrichtung (17) und erstem Rahmenteil (12) in der ersten Stellung vorzugsweise größer ist als in der zweiten Stellung.

6. Kinderwagenrahmen nach einem der vorhergehenden Ansprüche,
**dadurch gekennzeichnet, dass**
die Verriegelungseinrichtung (17) verschiebbar ist, wobei ein Abstand zwischen einem distalen Ende (24) der Verriegelungseinrichtung (17) und dem erstem Rahmenteil (12) in der ersten Stellung vorzugsweise größer ist als in der zweiten Stellung.

7. Kinderwagenrahmen nach einem der vorhergehenden Ansprüche,
**dadurch gekennzeichnet, dass**
das erste Rahmenteil (12) eines aus der Gruppe bestehend aus: ein Teil eines Schieberschaftes oder einer Hinterradstrebe oder einer Vorderradstrebe, ausbildet; und
das zweite Rahmenteil (11) ein anderes aus der Gruppe bestehend aus: ein Teil eines Schieberschaftes (11) oder einer Hinterradstrebe oder Vorderradstrebe, ausbildet.

8. Kinderwagenrahmen nach einem der vorhergehenden Ansprüche,
**dadurch gekennzeichnet, dass**
die Verriegelungseinrichtung (17) in der Nähe eines Faltgelenkes zwischen erstem (12) und zweitem (11) Rahmenteil angeordnet ist, insbesondere einen Abstand von weniger als 20 cm, vorzugsweise weniger als 10 cm zu diesem Faltgelenk aufweist.

9. Kinderwagenrahmen nach einem der vorhergehenden Ansprüche,
**dadurch gekennzeichnet, dass**
die Verriegelungseinrichtung (17), insbesondere an ihrem distalen Ende, eine, vorzugsweise sich verjüngende und/oder abgefaste, Arretiereinrichtung, insbesondere einen Haken (19), aufweist.

10. Kinderwagenrahmen nach einem der vorhergehenden Ansprüche,
**dadurch gekennzeichnet, dass**
am zweiten Rahmenteil (11) eine zweite Verriegelungseinrichtung angeordnet ist, die vorzugsweise mit der ersten Verriegelungseinrichtung (17) zusammenwirkt und/oder gegenüber dem zweiten Rahmenteil (11) unbeweglich ist, und/oder
die erste Verriegelungseinrichtung (17) direkt mit dem zweiten Rahmenteil (11) zusammenwirkt.

11. Kinderwagenrahmen nach einem der vorhergehenden Ansprüche,
**dadurch gekennzeichnet, dass**
ein/das Gelenk (14) zwischen erstem (12) und zweitem (11) Rahmenteil zugleich auch ein Gelenk zum Klappen eines dritten Rahmenteils (13) ausbildet oder ein weiteres Gelenk vorgesehen ist, über das ein drittes Rahmenteil (13) gegenüber dem ersten (12) und/oder zweiten (11) Rahmenteil klappbar ist, wobei vorzugsweise die durch das weitere Gelenk und dem Gelenk zwischen erstem (12) und zweiten (11) Rahmenteil definierten Rotationsachsen einen Abstand zueinander aufweisen, der geringer als 10 cm ist.

12. Kinderwagenrahmen nach einem der vorhergehenden Ansprüche,
**dadurch gekennzeichnet, dass**
ein/das Gelenk eine Bogenkontur, insbesondere Sichelkontur, aufweist, entlang der es vorzugsweise mit dem ersten (12) und/oder dem zweiten (11) Rahmenteil verbunden ist.

13. Kinderwagenrahmen nach einem der vorhergehenden Ansprüche,
**dadurch gekennzeichnet, dass**
die erste Verriegelungseinrichtung (17) zumindest in einer Stellung durch eine Federeinrichtung (22) vorgespannt ist.

14. Kinderwagenrahmen nach einem der vorhergehenden Ansprüche,
**dadurch gekennzeichnet, dass**
die Stellungsüberführungseinrichtung (29) mindestens eine Führungseinrichtung, insbesondere Gleiteinrichtung, vorzugsweise Anlaufschräge und/oder Kulissenführung und/oder Schienenführung, umfasst, vorzugsweise derart, dass ein Klappvorgang automatisch eine Stellungsüberführung zur Folge hat.

15. Kinderwagenrahmen nach einem der vorhergehenden Ansprüche,
**dadurch gekennzeichnet, dass**
die erste Verriegelungseinrichtung (17) zumindest teilweise entfernbar ist und/oder zumindest teilweise in einem Gehäuse untergebracht oder unterbringbar ist und/oder zumindest teilweise innerhalb des ersten Rahmenteils versenkt oder versenkbar ist.

16. Kinderwagen mit einem Kinderwagenrahmen nach einem der vorhergehenden Ansprüche.

17. Verfahren zum Zusammenklappen eines Kinderwagenrahmens nach einem der Ansprüche 1 bis 15, umfassend die Schritte:
- Zusammenklappen des ersten Rahmenteils (12) gegenüber dem zweiten Rahmenteil (11), um den Kinderwagenrahmen in eine zusammengefaltete Stellung zu bringen, und
- Verriegeln der Klappstellung zwischen dem ersten (12) und dem zweiten (11) Rahmenteil mittels der am ersten Rahmenteil (12) angeordneten Verriegelungseinrichtung (17), und
- Überführen der Verriegelungseinrichtung (17) von der zweiten Stellung in die erste Stellung in Bezug auf das erste Rahmenteil (12).

## Claims

1. Push chair frame (1), which is reversibly transferable from a first frame position, namely an unfolded position, into a second frame position, namely a folded position, comprising a first frame part (12) and a second frame part (11), which are foldable against one another, a first locking device (17), arranged on the first frame part (12), for locking a folded position of the first frame part (12) relative to the second frame part (11), and a position transfer device (29) for transferring the first locking device (17) from a first position in relation to the first frame part (12) into a second position, which is different therefrom, in relation to the first frame part (12), wherein the first position of the locking device (17) is a functional position, in which the locking device (17) is engaged, wherein the second position of the locking device (17) is an idle position, in which the locking device (17) is not engaged, wherein, when the push chair frame is in the folded position, the locking device (17) is in the first position, and, when the push chair frame is in the unfolded position, the locking device (17) is in the second position.

2. Push chair frame (1) according to claim 1,
**characterized in that**
the position transfer device (21) is configured such that a position transfer of the locking device (17) takes place automatically, preferably by means of a mechanical coupling between at least one frame part (12, 13) and the position transfer device (29), when unfolding and/or folding of the two frame parts (11, 12) takes place.

3. Push chair frame according to claim 1 or 2,
**characterized in that**
the locking device (17) protrudes from the first frame part (12) in the first position and/or abuts the second frame part (11) or does not protrude as far as in the first position in the second position.

4. Push chair frame according to any one of the preceding claims,
**characterized in that**
the first position of the locking device (17) is a functional position, preferably such that in the first position a locking function is present or producible, and/or the second position of the locking device (17) is an idle position, preferably such that in the second position no locking function is present or producible.

5. Push chair frame according to any one of the preceding claims,
**characterized in that**
the locking device (17) is pivotable, wherein an angle between locking device (17) and first frame part (12) is preferably greater in the first position than in the second position.

6. Push chair frame according to any one of the preceding claims,
**characterized in that**
the locking device (17) is displaceable, wherein a distance between a distal end (24) of the locking device (17) and the first frame part (12) is preferably greater in the first position than in the second position.

7. Push chair frame according to any one of the preceding claims,
**characterized in that**
the first frame part (12) forms one of the group consisting of: a part of a push bar shaft or a rear wheel strut or a front wheel strut; and
the second frame part (11) forms a different one of the group consisting of: a part of a push bar shaft (11) or a rear wheel strut or a front wheel strut.

8. Push chair frame according to any one of the preceding claims,
**characterized in that**
the locking device (17) is arranged in the vicinity of a folding joint between first (12) and second (11) frame part, in particular has a distance of less than 20 cm, preferably less than 10 cm, to this folding joint.

9. Push chair frame according to any one of the preceding claims,
**characterized in that**
the locking device (17) has, in particular at its distal end, a, preferably tapering and/or chamfered, locking device, in particular a hook (19).

10. Push chair frame according to any one of the preceding claims,
**characterized in that**
a second locking device is arranged on the second frame part (11), which preferably interacts with the first locking device (17) and/or is immovable in relation to the second frame part (11), and/or
the first locking device (17) interacts directly with the second frame part (11).

11. Push chair frame according to any one of the preceding claims,
**characterized in that**
a/the joint (14) between first (12) and second (11) frame part at the same time also forms a joint for folding a third frame part (13) or a further joint is provided, via which a third frame part (13) is foldable in relation to the first (12) and/or second frame part (11), wherein preferably the axes of rotation defined by the further joint and the joint between first (12) and second (11) frame part have a distance to one another which is less than 10 cm.

12. Push chair frame according to any one of the preceding claims,
**characterized in that**
a/the joint has a curved contour, in particular a sickle contour, along which it is preferably connected to the first (12) and/or the second (11) frame part.

13. Push chair frame according to any one of the preceding claims,
**characterized in that**
the first locking device (17) is pre-tensioned by a spring device (22) at least in one position.

14. Push chair frame according to any one of the preceding claims,
**characterized in that**
the position transfer device (29) comprises at least one guiding device, in particular a sliding device, preferably a starting inclination and/or link guide and/or rail guide, preferably such that a folding procedure automatically results in a position transfer.

15. Push chair frame according to any one of the preceding claims,
**characterized in that**
the first locking device (17) is at least partially removable and/or is or can be at least partially housed in a housing as/or is or can be at least partially countersunk within the first frame part.

16. Push chair having a push chair frame according to any one of the preceding claims.

17. Method for folding a push chair frame according to any one of claims 1 to 15, comprising the following steps:
- folding the first frame part (12) in relation to the second frame part (11) to bring the push chair frame into a folded position, and
- locking the folded position between the first (12) and the second (11) frame part by means of the locking device (17) arranged on the first frame part (12), and
- transferring the locking device (17) from the second position into the first position in relation to the first frame part (12).

## Revendications

1. Châssis de poussette (1) pouvant être amené de façon inversable d'une première position de châssis, à savoir une position dépliée, à une deuxième position de châssis, à savoir une position repliée, comprenant une première partie de châssis (12) et une deuxième partie de châssis (11) qui peuvent être repliées l'une vers l'autre, un premier dispositif de verrouillage (17) disposé sur la première partie de châssis (12) pour verrouiller une position de pliage de la première partie de châssis (12) par rapport à la deuxième partie de châssis (11) et un dispositif de changement de position (29) pour amener le premier dispositif de verrouillage (17) d'une première position par rapport à la première partie de châssis (12) à une deuxième position différente de celle-ci par rapport à la première partie de châssis (12), dans lequel la première position du dispositif de verrouillage (17) est une position fonctionnelle dans laquelle le dispositif de verrouillage (17) est en prise, dans lequel la deuxième position du dispositif de verrouillage (17) est une position de repos dans laquelle le dispositif de verrouillage (17) n'est pas en prise, dans lequel, quand le châssis de poussette est dans la position repliée, le dispositif de verrouillage (17) se trouve dans la première position et, quand le châssis de poussette est dans la position dépliée, le dispositif de verrouillage (17) se trouve dans la deuxième position.

2. Châssis de poussette (1) selon la revendication 1, **caractérisé en ce que** le dispositif de changement de position (29) est configuré de telle manière qu'un changement de position du dispositif de verrouillage (17) s'effectue automatiquement, de préférence au moyen d'un couplage mécanique entre au moins une partie de châssis (12, 13) et le dispositif de changement de position (29), quand les deux parties de châssis (11, 12) sont dépliées et/ou quand elles sont repliées.

3. Châssis de poussette selon la revendication 1 ou 2, **caractérisé en ce que** le dispositif de verrouillage (17) dépasse de la première partie de châssis (12) dans la première position et/ou repose sur la deuxième partie de châssis (11) ou dépasse moins loin que dans la première position dans la deuxième position.

4. Châssis de poussette selon l'une des revendications précédentes, **caractérisé en ce que** la première position du dispositif de verrouillage (17) est une position fonctionnelle, de préférence telle que, dans la première position, un verrouillage soit établi ou puisse être établi, et/ou la deuxième position du dispositif de verrouillage (17) est une position de repos, de préférence telle qu'un verrouillage ne soit pas ou ne puisse pas être établi dans la deuxième position.

5. Châssis de poussette selon l'une des revendications précédentes, **caractérisé en ce que** le dispositif de verrouillage (17) est capable de pivotement, un angle entre le dispositif de verrouillage (17) et la première partie de châssis (12) étant de préférence plus grand dans la première position que dans la deuxième.

6. Châssis de poussette selon l'une des revendications précédentes, **caractérisé en ce que** le dispositif de verrouillage (17) est capable de translation, une distance entre une extrémité distale (24) du dispositif de verrouillage (17) et la première partie de châssis (12) étant de préférence plus grande dans la première position que dans la deuxième.

7. Châssis de poussette selon l'une des revendications précédentes, **caractérisé en ce que** la première partie de châssis (12) est une pièce qui fait partie du groupe comprenant une partie du corps de coulisse ou un jambage de roue arrière ou un jambage de roue avant, et la deuxième partie de châssis (11) est une autre pièce qui fait partie du groupe comprenant une partie du corps de coulisse (11) ou un jambage de roue arrière ou un jambage de roue avant.

8. Châssis de poussette selon l'une des revendications précédentes, **caractérisé en ce que** le dispositif de verrouillage (17) est disposé à proximité d'une articulation pliante entre la première partie de châssis (12) et la deuxième (11), en particulier à une distance de cette articulation pliante de moins de 20 cm, de préférence moins de 10 cm.

9. Châssis de poussette selon l'une des revendications précédentes, **caractérisé en ce que** le dispositif de verrouillage (17), en particulier à son extrémité distale, comporte un dispositif de blocage, de préférence qui se resserre et/ou biseauté, en particulier un crochet (19).

10. Châssis de poussette selon l'une des revendications précédentes, **caractérisé en ce qu'**est disposé sur la deuxième partie de châssis (11) un deuxième dispositif de verrouillage qui coopère de préférence avec le premier dispositif de verrouillage (17) et/ou qui est immobile par rapport à la deuxième partie de châssis (11), et/ou le premier dispositif de verrouillage (17) coopère directement avec la deuxième partie de châssis (11).

11. Châssis de poussette selon l'une des revendications précédentes, **caractérisé en ce qu'**une articulation/l'articulation (14) entre la première partie de châssis (12) et la deuxième (11) forme en même temps une articulation pour plier une troisième partie de châssis (13), ou il est prévu une autre articulation au niveau de laquelle une troisième partie de châssis (13) peut être repliée par rapport à la première partie de châssis (12) et/ou à la deuxième (11), les axes de rotation définis par l'autre articulation et par l'articulation entre la première partie de châssis (12) et la deuxième (11) étant écartés l'un de l'autre de moins de 10 cm.

12. Châssis de poussette selon l'une des revendications précédentes, **caractérisé en ce qu'**une articulation/l'articulation présente un contour en arc de cercle, en particulier en forme de faucille, le long duquel elle est reliée à la première partie de châssis (12) et/ou à la deuxième (11).

13. Châssis de poussette selon l'une des revendications précédentes, **caractérisé en ce que** le premier dispositif de verrouillage (17) est précontraint au moins dans une position par un dispositif de ressort (22).

14. Châssis de poussette selon l'une des revendications précédentes, **caractérisé en ce que** le dispositif de changement de position (29) comporte au moins un dispositif de guidage, en particulier un dispositif de glissement, de préférence un biseau d'approche et/ou une glissière de guidage et/ou un rail de guidage, de préférence de telle façon qu'une opération de pliage entraîne automatiquement un changement de position.

15. Châssis de poussette selon l'une des revendications précédentes, **caractérisé en ce que** le premier dispositif de verrouillage (17) peut être au moins en partie retiré et/ou est logé ou peut être logé au moins en partie dans un boîtier et/ou est renfoncé ou peut être renfoncé au moins en partie à l'intérieur de la première partie de châssis.

16. Poussette possédant un châssis de poussette selon l'une des revendications précédentes.

17. Procédé pour replier un châssis de poussette selon l'une des revendications 1 à 15, comprenant les étapes suivantes :
- pliage de la première partie de châssis (12) par rapport à la deuxième partie de châssis (11) pour amener le châssis de poussette dans une position repliée et
- verrouillage de la position pliée entre la première partie de châssis (12) et la deuxième (11) au moyen du dispositif de verrouillage (17) disposé sur la première partie de châssis (12), et
- déplacement du dispositif de verrouillage (17) de la deuxième position à la première position par rapport à la première partie de châssis (12).
